# EUROPÄISCHE PATENTSCHRIFT

(11) **EP 3 434 649 B1**
(45) Veröffentlichungstag und Bekanntmachung des Hinweises auf die Patenterteilung: **09.09.2020**
(21) Anmeldenummer: 18171156.5
(22) Anmeldetag: 08.05.2018
(51) Int. Cl.: C02F 1/32, C02F 1/72, C02F 1/78, C02F 1/74, C02F 3/12, C02F 101/34

(54) **VERFAHREN ZUM ABBAU VON PERSISTENTEN ORGANISCHEN VERUNREINIGUNGEN AUS ABWASSER**
METHOD FOR THE DEGRADATION OF PERSISTENT ORGANIC IMPURITIES FROM WASTE WATER
PROCÉDÉ DE DÉGRADATION DES CONTAMINANTS ORGANIQUES PERSISTANTS DES EAUX USÉES

(30) Priorität: 27.07.2017 DE 102017007148
(43) Veröffentlichungstag der Anmeldung: 30.01.2019
(73) Patentinhaber: Ingenieurbüro Bokatec, 57234 Wilnsdorf (DE)
(72) Erfinder: BOLLER, Reinhard, Dr.-Dipl.-Ing. agr. (FH), 57234 Wilnsdorf (DE); RAU, Ruth, 57234 Wilnsdorf (DE)
(74) Vertreter: Haverkamp, Jens

(56) Entgegenhaltungen:
- WO-A1-98/29346
- DE-A1- 19 755 396
- DE-A1-102005 056 114
- US-A1- 2017 137 310

## Beschreibung

Die Erfindung betrifft ein Verfahren zum Abbau von persistenten organischen Verunreinigungen aus biologisch gereinigtem Abwasser oder aus Grau- oder Niederschlagwasser.

Kleinkläranlagen oder kleine Kläranlagen dienen der dezentralen Abwasserbeseitigung in ländlich strukturierten Gebieten, in denen aus wirtschaftlichen oder sonstigen Gründen heraus kein Kanalanschluss vorhanden ist oder hergestellt wird bzw. werden kann.

Viele dieser für die dezentrale Abwasserreinigung eingesetzten Kläranlagen der vorstehend beschriebenen Art arbeiten nach dem so genannten Belebtschlammverfahren. Eine besondere Ausgestaltung dieses Belebtschlammverfahrens sind beispielsweise die SBR Anlagen. Diese Anlagen sind weit verbreitet, sowohl mit einer klassischen anaeroben Speicherung des Schlamms als auch mit einer aeroben Schlammstabilisierung. Nachfolgend wird das SBR Verfahren beschrieben.

Im Gegensatz zur Belebungsanlage sind beim SBR-Reaktor Belebungsbecken und Nachklärbecken nicht räumlich voneinander getrennt. Im kombinierten Belebungsbecken/Nachklärbecken (SBR-Reaktor) findet die eigentliche biologische Abwasserreinigung statt. In dem SBR-Reaktor werden die Funktionen von Belebungsbecken und Nachklärbecken zeitlich voneinander getrennt. Im Prinzip wird der SBR-Reaktor eine bestimmte Zeit als Belebungsbecken genutzt, danach wird der gleiche Raum nach dem nachfolgend beschriebenen Schema als Nachklärbecken in Anspruch genommen. Die entsprechende zeitliche und funktionale Abfolge wird Zyklus genannt.

Ein Zyklus beginnt mit der sogenannten Füllphase. Dem SBR-Reaktor wird in einem bestimmten Zeitraum mittels einer Pumpe, etwa einer Mammutpumpe mechanisch vorgereinigtes Abwasser aus der Vorklärung zugeführt. Während dieser Füllphase läuft parallel der Prozess der biologischen Abwasserreinigung. Diese biologische Abwasserreinigung wird durch frei herumschwimmende Bakterien bewirkt, die sich zu sogenannten Belebtschlammflocken zusammenballen. Da auch beim Belebungsverfahren, wie bei allen anderen aeroben Abwasserreinigungsverfahren, Sauerstoff zum Abbau von organischen Verbindungen durch die Bakterien benötigt wird, wird dieser durch auf dem Boden des Belebungsbeckens liegende Belüftungseinrichtungen eingetragen. Hierdurch wird die ankommende Druckluft in feine Luftbläschen aufgeteilt und dem Abwasser zugeführt. Durch die danach folgende Aufwärtsbewegung der Luftblasen erfolgt eine stetige Vermischung des Abwassers mit den Belebtschlammflocken. Die Luftversorgung der Belüftungseinrichtungen geschieht auch hier in einem sogenannten Pausenlaufzeitintervall.

Anschließend beginnt die Absetzphase. In dieser Zeit setzt sich der Belebtschlamm auf der Beckensohle ab. Das gereinigte und von Belebtschlamm befreite Abwasser befindet sich im oberen Bereich, die als Klarwasserzone bezeichnet wird. In diesem Zeitraum wird das zuvor als Belebungsbecken genutzte Behältervolumen als Nachklärbecken genutzt.

Nach Beendigung der Absetzphase läuft die Klarwasserabzugsphase als die letzte Phase des Zyklus ab. Hier wird im oberen Beckenbereich aus der Klarwasserzone das gereinigte Abwasser abgezogen, typischerweise mit einer Pumpe, etwa einer Mammutpumpe und über einen kleinen Vorlagebehälter zur Beprobung mit Überlauf dem Ablauf zugeführt. Dieser Vorlagebehälter ist notwendig, da die Abwasserreinigung im Zyklus (chargenweise) abläuft und somit nur zu bestimmten Zeiten am Tag eine gesicherte Probenahme möglich ist. Durch den stets gefüllten Vorlagebehälter ist eine jederzeitige Probenahme gesichert.

Auch bei einer bestimmungsgemäß funktionierenden SBR Anlage befinden sich aber immer noch Restschmutzstoffe im Abwasser. So sind beispielsweise biologisch nicht abbaubare organische Bestandteile (Stoffe, Schmutzstoffe, Mikroschadstoffe), Spurenstoffe (beispielsweise Rückstände von Medikamenten, Hormone, Schmerzmittel, Antiepileptika, Haushaltschemikalien, Spülmaschinenreiniger, Waschmittel Herbizide, Biozide etc.), Reste von biologisch abbaubaren Bestandteilen (biologisch gereinigtes Abwasser hat in der Regel nach der biologischen Reinigung keinen BSB5-Wert von 0 mg/l, sondern auch bei einer gut funktionierenden Anlagewerte zwischen 5-10 mg/Liter), Keime (Bakterien, Viren, beispielsweise E-Coli, coliforme Bakterien, Streptokokken, Enterokokken u.a.) und Schlammbestandteile noch im biologisch gereinigten Abwasser - dem Klarwasser - enthalten.

Ähnlich verhält es sich mit Grauwasseranlagen. Bei diesen Anlagen wird nur das in Haushaltungen/Hotels/Gaststätten beziehungsweise anderen Anwendungen anfallende Grauwasser in einer Anlage gereinigt. Auch hierbei sind, wie vorstehend ausgeführt, entsprechende Restverschmutzungen im Ablauf der Anlagen vorhanden.

Auch Regenwasserzisternen, Regenwasserspeicher und Anlagen, die Regenwasser sammeln, bevorraten und aufarbeiten, können trotz eingebauter Filtersysteme eine entsprechend organische Verschmutzung des Wassers (beispielsweise aus Auswaschungen von in Hausfassaden und Dachbahnen enthaltenen Stoffen, Rückstände von Reifenabrieb, Herbizide und Fungizide aus der Landwirtschaft) sowie eine entsprechende Keimbelastung aufweisen.

Bei den vorstehend genannten Stoffen handelt es sich um nicht oder nur teilweise biologisch abbaubare organische Verbindungen/Mikroschadstoffe/Mikroverunreinigungen/Spurenstoffe/Schadstoffe. Diese sind unter dem im Rahmen dieser Ausführungen benutzten Begriff der persistenten organischen Verbindungen zu verstehen. Die vorstehend genannten Stoffe stellen keine abschließende Aufzählung dar, sondern sollen lediglich verdeutlichen, welche Verunreinigungen hiermit gemeint sind.

Das Wasser kann nach der biologischen Reinigung noch über entsprechende Filtersysteme geleitet werden, um die oben benannten Reststoffe herauszufiltern. Auch können entsprechende Fällmittel zugegeben werden, um durch Fällungsprozesse eine weitergehende Reinigung zu erzielen. Bezüglich der Keimbelastung kann eine entsprechende Entkeimung/Hygienisierung durch UV-Licht erreicht werden. Weiterhin ist eine Behandlung des Abwassers mit Ozon grundsätzlich bekannt.

Allerdings ist keines dieser aus dem Stand der Technik bekannten Verfahren in der Lage, die oben benannten Reststoffe (Schmutzstoffe, Spurenstoffe, Mikroschadstoffe) aus dem Abwasser einer Kleinkläranlage, wie diese typischerweise für den dezentralen Einsatz genutzt werden, effektiv und in einem wirtschaftlich vertretbaren Maße zu entfernen. Auch steht für derartige Behandlungsverfahren das notwendige Fachpersonal nicht zur Verfügung. Derartige dezentrale Kleinkläranlagen werden allenfalls ein bis zwei Mal im Jahr gewartet.

Im Rahmen kommunaler Kläranlagen oder in Trinkwasseraufbereitungsanlagen, also bei großtechnischen Anlagen, werden Oxidationsprozesse zum Abbau von persistenten organischen Verunreinigungen durchgeführt. Hierbei handelt es sich um die sogenannten *Advanced Oxidation Prozesse* (AOPs). Bei den AOPs erfolgt mit Hilfe von O₃, H₂O₂, Fe/H₂O₂ (Photo-Fenton), TiO₂ oder deren Kombination unter UV-Bestrahlung eine Oxidation der Schadstoffe, wobei die Oxidation dabei direkt durch diese Stoffe und insbesondere auch über die dabei entstehenden OH-Radikale (Hydroxyl-Radikale) bewirkt wird. Die Spurenstoffe werden dabei im Idealfall in Endprodukte wie H₂O, CO₂ umgewandelt. In Abhängigkeit von der Abwassermatrix können bei diesem Vorgang auch unspezifische Nebenprodukte entstehen. Um eine solche Oxidation zu erreichen, werden die vorgenannten Oxidatoren oder einzelne davon in das zu reinigende Wasser eingebracht.

Um den gewünschten Abbau dieser Mikroschadstoffe zu erreichen, kann beispielsweise als Ozon-Precursor reiner Sauerstoff in das Wasser eingeperlt werden. Durch gleichzeitige UV-Bestrahlung kann hierdurch der gewünschte Oxidator Ozon gebildet werden.

Bei bekannten Systemen, die Ozon in das zu klärende Abwasser einleiten, ist ein zusätzlicher Verdichter/Kompressor erforderlich, um für den Ozongenerator die entsprechende Luftversorgung sicherzustellen. Dies bedingt einen entsprechend hohen apparativen Aufwand, da an jedem System zwei Verdichter/Kompressoren arbeiten: ein Verdichter/Kompressor für die Sauerstoffversorgung der eigentlichen Abwasserreinigungsanlage, etwa der SBR-Anlage und ein weiterer Verdichter/Kompressor für die Versorgung des Ozongenerators mit Luft. Darüber hinaus muss das gebildete Ozon über ein geeignetes Eintragssystem, wie etwa Injektoren oder Diffusoren in das Abwasser eingetragen werden. Hierfür reicht die Druckluft eines Membranverdichters (typischer Arbeitsbereich bis 350 mbar) nicht aus.

Oxidative Verfahren auf Ozonbasis sind wartungs- und energieintensive Verfahren. Kleinkläranlagen sind allerdings für die mechanisch-biologische Abwasserbehandlung auf Basis einfacher Technologiekonzepte entwickelt und verfügen im Gegensatz zu zentralen Großkläranlagen nicht über entsprechend qualifiziertes und permanent anwesendes Personal für den Betrieb und die Überwachung der Anlage. Dies bedeutet, dass bei Kleinkläranlagen nur eine Technologie eingesetzt werden kann, die keiner ständigen Betreuung bedarf, kostengünstig in Anschaffung und Betrieb ist und trotzdem eine hohe Reinigungsleistung aufweist.

Aus US 2017/137310 A1 ist ein Verfahren zur photochemischen Beseitigung von biologischen Fremdstoffen aus Abwässern von Pharmazeutika herstellenden Unternehmen oder von Pharmazeutika verbrauchenden Unternehmen beschrieben. Bei diesem vorbekannten Verfahren wird in einem ersten Schritt das Abwasser einer hydrophylen Membranfiltration unterworfen, bevor dieses anschließend einen photochemischen Reaktor durchströmt. Dieser ist UV-bestrahlt. Der Reaktionsbehälter ist als liegender Behälter ausgeführt, der von dem filtrierten Abwasser in Richtung seiner Längserstreckung durchströmt wird. In den Reaktionsbehälter wird Luft eingebracht, um den oxidativen Abbau der nicht gewünschten Produkte zu unterstützen. Gereinigt wird mit diesem Verfahren Abwasser, nicht jedoch das aus einer Kleinkläranlage oder kleinen Kläranlage stammende Klarwasser oder Grau- oder Niederschlagswasser.

Ausgehend von dem eingangs diskutierten Stand der Technik liegt der Erfindung die Aufgabe zu Grunde ein Verfahren zum Abbau von persistenten organischen Verunreinigungen aus biologisch gereinigtem Abwasser oder aus Grau- oder Niederschlagwasser vorzuschlagen, das ohne nennenswerte Erhöhung des Betriebs- und Wartungsaufwandes sich in einer dezentralen Kleinkläranlage, mithin in einer Kläranlage, die grundsätzlich nur ein bis zwei Mal überprüft bzw. gewartet werden muss, eignet.

Gelöst wird diese Aufgabe durch ein Verfahren mit den Merkmalen des Anspruchs 1.

Eine Vorrichtung, mit der das Verfahren durchgeführt werden kann, verfügt über einen Reaktionsbehälter, der auch als Behandlungsstufe angesprochen werden kann, in dem der Reinigungsprozess durchgeführt wird. Dieser Reaktionsbehälter kann ein eigenständiger Behälter sein, der beispielsweise neben einer Kleinkläranlage oder benachbart zu einer Grau- oder Niederschlagwasserzisterne angeordnet ist. Durchaus möglich ist es auch den Reaktionsbehälter in eine Kleinkläranlage zu integrieren, beispielsweise durch Vorsehen einer entsprechenden Kammerung. Gleiches gilt selbstverständlich auch für einen Grau- oder Niederschlagwasserbehälter. Der Reaktionsbehälter verfügt über einen Zulauf, über den das zu reinigende Wasser in den Reaktionsbehälter einfließt und über einen Ablauf, durch den gereinigtes Wasser abgeführt wird. Bei einer Verwendung der Vorrichtung im Zusammenhang mit einer Kleinkläranlage ist der Reaktionsbehälter an den Klarwasserabzug angeschlossen. Mithin stellt das über den Klarwasserabzug aus der Kleinkläranlage abgezogene Wasser das in dem Reaktionsbehälter zu reinigende Abwasser dar.

Bei dem beanspruchten Verfahren werden die Oxidatoren in situ und damit in dem mit zu reinigendem Abwasser befüllten Reaktionsbehälter erzeugt. In geschickter Weise macht man sich bei einer Kleinkläranlage den Umstand zu Nutze, dass die zu reinigende Abwassermenge gegenüber derjenigen aus großtechnischen Kläranlagen recht klein ist. Dieses erlaubt, das als Oxidator gewünschte Ozon aus in dem Abwasser gelösten Sauerstoff und durch den Sauerstoff, der in den Reaktionsbehälter eingebrachte Luftblasen enthalten ist, gebildet wird. Insofern stellt der systemseitig vorhandene Sauerstoff den Oxidator-Precursor für das daraus zu bildende Ozon dar. Zu diesem Zweck wird typischerweise Umgebungsluft verwendet. Um aus dem zugeführten Sauerstoff Ozon zu generieren, wird innerhalb des Reaktionsbehälters ein Reaktionsbereich, der sich oberhalb der Luftblasenzufuhr befindet, durch wenigstens eine UV-Strahlungsquelle bestrahlt. Diese UV-Strahlungsquelle emitiert Licht in einer Wellenlänge, um aus dem Sauerstoff Ozon zu generieren. Als zweckmäßig hat sich ein Wellenlängenbereich zwischen 180 und 190 nm, vorzugsweise 185 nm erwiesen. Bei einer Bestrahlung des Reaktionsbereiches mit dieser Wellenlänge ist die Ozonbildung am größten. Wenn im Rahmen dieser Ausführungen von einer Wellenlänge die Rede ist, ist hierunter ein eng bemessener Wellenlängenbereich zu verstehen. Als Wellenlänge wird dann aus dem Wellenspektrum diejenige Wellenlänge angegeben, die den Scheitel des Wellenspektrums bildet.

Durch das gebildete Ozon können bereits eine Vielzahl von persistenten organischen Verunreinigungen aufoxidiert und auf diese Weise beseitig werden. Allerdings reagieren viele organische Stoffe, wie etwa gesättigte Alkohole, Benzole, Alkane oder typische Mikroschadstoffe wie Ibuprofen oder Diuron nur mit sehr niedrigen Reaktionskonstanten mit Ozon. Um das Reinigungsspektrum zu vergrößern ist bei der erfindungsgemäßen Vorrichtung sowie bei dem erfindungsgemäßen Verfahren vorgesehen, dass für die Reinigung des Abwassers ein weiterer Oxidator in den Reaktionsbehälter zugegeben wird. Hierbei handelt es sich um einen Oxidator, aus dem unter einer UV-Bestrahlung Hydroxyl-Radikale (OH*-Radikale) gebildet werden. Hierbei kann es sich beispielsweise um Wasserstoffperoxid (H₂O₂) handeln. Um die gewünschte Reaktion zum Erzeugen von Hydroxyl-Radikalen durchzuführen, wird eine UV-Bestrahlung in einer zweiten Wellenlänge benötigt, und zwar im Bereich 200 bis 260 nm, vorzugsweise unter 255 nm. Bei einer Wellenlänge kleiner 255 nm ist die Hydroxyl-Radikalbildung bei dem Oxidator-Precursor Wasserstoffperoxid besonders hoch. Dieser weitere Oxidator wird über eine Oxidatorenzufuhr in den Reaktionsbereich des Reaktionsbehälters eingebracht. Zugeführt werden kann dieser Oxidator beispielsweise zusammen mit dem in den Reaktionsbehälter einfließenden zu reinigendem Wasser. Eine Dosierung dieses Oxidators kann auch in das in dem Reaktionsbehälter befindliche Wasser hinein vorgenommen werden.

Zur UV-Bestrahlung kann eine die beiden in Rede stehenden Wellenlängen - 180 bis 190 nm und 200 bis 260 nm - abgebende Lampe oder auch eine Lampenanordnung ebenso eingesetzt werden, wie ein LED-Array.

Wenn im Rahmen dieser Ausführungen von einem Oxidator die Rede ist, umfasst dieser Begriff auch Oxidatorgemische und umfasst ebenfalls, wie vorstehend bereits ausgeführt, Oxidator-Precursor.

In geschickter Weise wird die Zufuhr des in der Umgebungsluft enthaltenen Sauerstoffs in den Luftblasen in den Reaktionsbereich nicht nur benutzt, um den für die Ozonerzeugung benötigten Sauerstoff in den mit zu reinigendem Wasser befüllten Reaktionsbehälter einzubringen. Zugleich bewirken die aus einem Luftaustritt unterhalb des Reaktionsbereiches oder in seinem unteren Abschnitt ausperlenden Luftblasen eine intensive Durchmischung sowie eine Sauerstoffsättigung. Dieses bewirkt, dass die in dem Reaktionsbereich gebildeten Oxidatoren - Ozon und Hydroxyl-Radikale - mit dem zu reinigenden Wasser durchmischt werden, wodurch die Reinigungsdauer zum Reinigen eines bestimmten Wasservolumens entsprechend reduziert ist. Dieses gilt vor allem für die typischerweise nicht über eine längere Zeitspanne beständigen Hydroxyl-Radikale. Die vermischende Tätigkeit der in dem zu reinigenden Wasser isostatisch aufsteigenden Luftblasen dient zugleich einer Vermischung des über die Oxidatorenzufuhr zugegeben Oxidators bzw. seines Precursors, beispielsweise Wasserstoffperoxid. Darüber hinaus wird durch die dauerhafte Sauerstoffsättigung die Bildung von RHO₂*- Radikalen (Peroxylradikalen) gefördert und somit das Auftreten von unerwünschten Polymerisationsreaktionen vermieden.

Zum Betreiben einer solchen Vorrichtung werden, wenn diese Teil einer Kleinkläranlage ist oder an eine solche angeschlossen ist, mit Ausnahme der Oxidatorenzufuhr keine zusätzlichen Aktoren benötigt. Druckluft wird zum Betrieb einer Kleinkläranlage ohnehin benötigt. Infolgedessen wird der Luftaustritt durch die zum Betrieb der Kleinkläranlage vorgesehene bzw. bereitgestellte Druckluft gespeist. Bei der Oxidatorenzufuhr handelt es sich typischerweise um ein Vorratsbehältnis mit dem darin bevorratenden Oxidator und eine an eine Steuereinheit angeschlossene Dosiervorrichtung. Die Dosiervorrichtung kann pneumatisch arbeitend ausgelegt sein. Dann kann zum Betrieb der Dosiervorrichtung das bei einem Betrieb einer Kleinkläranlage ohnehin vorhandene Medium Druckluft genutzt werden. Eine solche Vorrichtung benötigt keinerlei Wartungen, die in einem engeren Zeitintervall durchgeführt werden müssten, als dieses für eine Kleinkläranlage ohnehin vorgesehen ist.

Wenn im Rahmen dieser Ausführungen von einer Kleinkläranlage die Rede ist, handelt es sich hierbei um eine typische dezentrale Kläranlage, an die bis zu 50 Einwohnerwerte angeschlossen sind.

Der Reaktionsbehälter ist ein Behälter, dessen Höhe größer als sein Durchmesser ist. Auf diese Weise kann der oberhalb des Luftauslasses befindliche Reaktionsbereich eine entsprechende Länge aufweisen, sodass dann durchaus auch die gesamte oder weitgehend gesamte Querschnittsfläche des Reaktionsbehälters als Reaktionsbereich genutzt werden kann. Entsprechend lang ist in einem solchen Fall auch die Möglichkeit einer intensiven Durchmischung. Die zumindest eine UV-Strahlungsquelle weist daher bevorzugt eine langgestreckte Form auf. Durchaus können mehrere, umfänglich verteilt angeordnete UV-Strahlungsquellen vorgesehen sein.

Bei dem Reaktionsbehälter handelt es sich typischerweise um einen stehenden Behälter, der gemäß einer Ausgestaltung von dem zu reinigendem Wasser in vertikaler Richtung durchströmt wird. Dieses erlaubt die Auslegung einer solchen Vorrichtung, dass die in das zu reinigende Wasser eingebrachten Luftblasen im Gegenstrom zu dem den Reaktionsbehälter durchströmenden Wasser aufsteigen und damit eine besonders effektive Vermengung und Ozon-Lösung ermöglicht ist. Die dabei entstehenden Turbulenzen unterstützen den Reinigungsvorgang ebenso wie eine Durchmischung.

Die Oxidatorenzufuhr kann gemäß einer Ausgestaltung als Oxidatorzufuhreinheit ausgebildet sein, und zwar umfassend ein Vorratsbehältnis und eine Dosiervorrichtung, wobei diese Oxidatorzufuhreinheit als schwimmende Einheit ausgelegt ist und somit auf dem in dem Reaktionsbehälter befindlichen Wasser schwimmt.

Erfindungsgemäß ist der Betrieb dieser Vorrichtung zuflussgesteuert und somit gesteuert durch die zugeführte zu reinigende Wassermenge. Der Behälter weist zu diesem Zweck einen Überflussablauf auf.

Weitere Vorteile und Ausgestaltungen der Erfindung ergeben sich aus der nachfolgenden Beschreibung konkreter Ausführungsbeispiele unter Bezugnahme auf die beigefügten Figuren. Es zeigen:
- **Fig. 1**:: Eine schematisierte Darstellung einer SBR-Anlage, an die eine Abwasserbehandlungsanlage in einer ersten Ausgestaltung angeschlossen ist,
- **Fig. 2:**: die SBR-Anlage der Figur 1 mit einer daran angeschlossen Abwasserbehandlungsanlage gemäß einer zweiten Ausgestaltung,
- **Fig. 3:**: die SBR-Anlage der Figur 1 mit einer daran angeschlossen Abwasserbehandlungsanlage gemäß einer dritten Ausgestaltung und
- **Fig. 4:**: die SBR-Anlage der Figur 1 mit einer daran angeschlossen Abwasserbehandlungsanlage gemäß einer vierten Ausgestaltung.

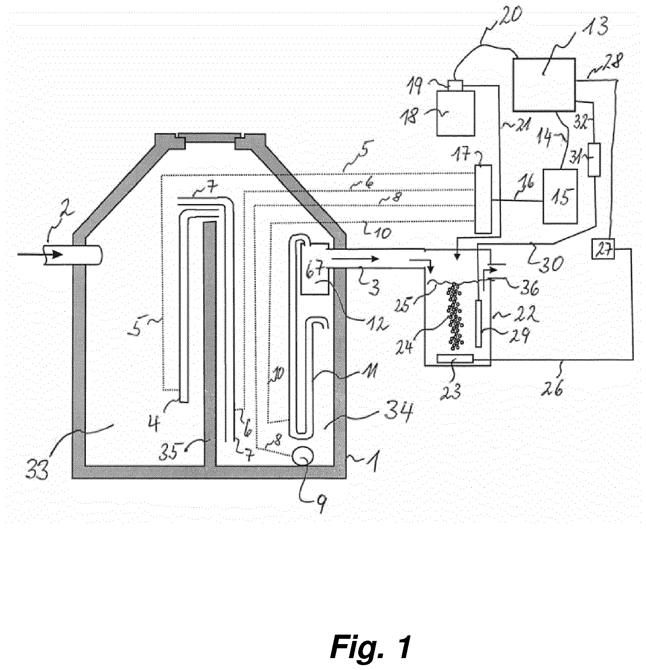

In Figur 1 wird die Anwendung einer Abwasserbehandlungsanlage sowie des erfindungsgemäßen Verfahrens in einer ersten Ausführung beispielhaft vorgestellt. In Figur 1 ist eine als dezentral einzusetzende Kleinkläranlage ausgeführte Abwasserbehandlungsanlage 1 dargestellt. Die Abwasserbehandlungsanlage 1 besitzt einen Zulauf 2, aus dem das Abwasser in die Abwasserbehandlungsanlage fließt. In der beispielhaften Darstellung ist die Abwasserbehandlungsanlage in die Behandlungsstufe des Schlammspeichers mit integriertem Puffer 33 und in die Behandlungsstufe eines SBR Reaktors 34 aufgeteilt. Die Abwasserbehandlungsanlage 1 wird durch eine Trennwand 35 in die beiden vorstehend genannten Behandlungsstufen aufgeteilt. Der Druckluftheber 4 (auch als Mammutpumpe bezeichnet) für die Beschickung, der Druckluftheber 7 für den Überschussschlammabzug, der Druckluftheber 11 für den Klarwasserabzug sowie die Belüftungsvorrichtung 9 werden über Luftleitungen 5, 6, 8, 10 mit der für den jeweiligen Betrieb notwendigen Druckluft versorgt. Hierzu schaltet eine Steuerung 13 über eine Steuerleitung 14 einen Kompressor 15 zur Erzeugung von Druckluft für den Zeitraum der benötigten Druckluft ein. Anstelle eines Kompressors kann ebenfalls ein Verdichter oder eine andere Druckluft erzeugende Einheit vorgesehen sein. Der Kompressor 15 zur Erzeugung von Druckluft ist über eine Leitung 16 mit einer Vorrichtung 17 zur Verteilung der Druckluft verbunden. Diese Vorrichtung 17 zur Verteilung der Druckluft hat Regelorgane in Form von Magnetventilen zum Öffnen und Schließen von Ausgängen. Anstelle von Magnetventilen können auch andere Aktoren, wie beispielsweise Schrittmotoren oder Stellmotoren eingesetzt werden. Diese Regelorgane sind mit der Steuerung 13 über entsprechende Steuerleitungen verbunden (in der Figur nicht gezeigt). Durch das Öffnen und Schließen einzelner Regelorgane der Vorrichtung zur Verteilung der Druckluft wird die von dem Kompressor 15 erzeugte Druckluft über die entsprechende Verbindungsleitung 5, 6, 8, 10 zu dem jeweiligen Verbraucher wie beispielsweise Druckluftheber 4, 7, 11 oder Belüftungsvorrichtung 9 geleitet.

Nach der biologischen Reinigung fließt das gereinigte Abwasser über die Ablaufleitung 3 in eine Vorrichtung zum Abbau von persistenten organischen Verunreinigungen. Diese Vorrichtung umfasst einen im Folgenden als Behandlungsstufe 22 angesprochenen Reaktionsbehälter. In der Behandlungsstufe 22 befindet sich ein Luftauslass 23 einer Belüftungsvorrichtung. Der Luftauslass 23 wird über eine Druckluftleitung 26 von dem Kompressor 27 mit Druckluft versorgt. Die Ansteuerung des Kompressors 27 erfolgt durch die Steuerung 13 über die Steuerleitung 28. Durch die aus dem Luftauslass 23 ausperlenden Luftblasen erfolgt eine Durchmischung des in der Behandlungsstufe 22 befindlichen Wassers. Der oberhalb des Luftauslasses 23 befindliche Bereich der Behandlungsstufe 22 stellt einen Reaktionsbereich dar. Weiterhin wird durch die aufsteigenden, durch den Reaktionsbereich hindurch tretenden Luftblasen 24 eine über eine Leitung 21 flüssig dosierten Oxidator, wobei bei dem dargestellten Ausführungsbeispiel Wasserstoffperoxid als Oxidator bzw. als Oxidator-Precursor eingesetzt wird, zugesetzt. Weiterhin wird über den Luftauslass über die Luftblasen 24 das in der Behandlungsstufe 22 befindliche Wasser mit Sauerstoff angereichert, wobei das Wasser vorzugsweise mit Sauerstoff gesättigt wird. Weiterhin verfügt die Behandlungsstufe 22 über einen Ablauf 36. Je nach Größe der Behandlungsstufe 22 kann die Behandlung sowohl im Durchlaufverfahren als auch im Chargenverfahren bzw. Zyklusverfahren durchgeführt werden. In der Behandlungsstufe 22 befindet sich eine UV-Strahlungsquelle 29, die mit einer elektrischen Leitung 30 mit einem Vorschaltgerät 31 verbunden ist. Das Vorschaltgerät 31 ist wiederum über eine Steuerleitung 32 mit der Steuerung 13 verbunden.

Die UV Strahlungsquelle 29 kann beispielsweise aus einer oder mehreren UV-C Röhren bestehen (beispielsweise Quecksilberdampflampe als Niederdrucklampe oder Mitteldrucklampen), die bei einer Wellenlänge von 254 nm UVC Strahlung in den Reaktionsbereich und damit in das umgebende Abwasser abstrahlt. Die UV Strahlungsquelle 29 kann aber auch aus einer LED oder mehreren LEDs oder sonstigen Strahlungsquelle bestehen. Die UV-C Strahlungsquelle kann auch eine Excimer-Lampe sein. Durch die UV-Strahlung erfolgt eine Beschleunigung der Reaktion des Ozons sowie des Wasserstoffperoxid oder eines sonstigen Oxidationsmittels mit den in dem zu reinigenden Wasser vorhandenen organischen Bestandteilen/Reststoffen/Spurenstoffen, die durch den vorangegangenen biologischen Reinigungsprozess noch nicht abgebaut worden sind. Zudem erfolgt bei Einsatz einer Strahlung zwischen 250 nm und 300 nm eine Entkeimung des Abwassers mit Abtötung der Viren, Bakterien und sonstiger Keime. Weiterhin erfolgt durch die UV-Strahlung ein Abbau des überschüssigen Ozons. Anschließend wird das nunmehr gereinigte Wasser über den Ablauf 36 in einen Vorfluter (beispielsweise Bach oder Fluss) oder Kanal oder in einer Versickerung gelangen oder als Brauchwasser wieder verwendet werden.

Wenn aus dem Behälter 18 der Oxidator, beispielsweise Wasserstoffperoxid, in die Behandlungsstufe 22 dosiert werden soll, schaltet die Steuerung 13 über die Steuerleitung 20 die Dosierpumpe 19 ein, sodass über die Verbindungsleitung 21 die zu dosierende Flüssigkeit in die Behandlungsstufe 22 gelangt. Für die Dosierung kann auch eine pneumatische Dosiervorrichtung verwendet werden. Somit bildet der Behälter 18 als Vorratsbehälter und die Dosierpumpe 19 die Oxidatorzufuhr bei dem Ausführungsbeispiel der Figur 1.

Der zu dosierende Oxidator kann beispielsweise Wasserstoffperoxid (H₂O₂) sein und der Behandlungsstufe 22 zugeführt werden. Mit Wasserstoffperoxid kann beispielsweise eine Entkeimung des Abwassers durch Abtöten von darin befindlicher Bakterien und Keime erreicht werden. In einer besonders bevorzugten Variante kann mit Wasserstoffperoxid auch eine Oxidation/Abbau der durch biologischen Abbau nicht abbaubaren Stoffe (auch als biologisch abbauresistente Stoffe bezeichnet) erreicht werden. In einer besonders bevorzugten Variante wird dies in einer Kombination mit einer UV-Lampe und/oder eine Vermischung/Verwirbelung durch Eintrag von Umgebungsluft, aus der sich unter der UV-Bestrahlung Ozon bildet, durchgeführt. Das Ozon wird auf einfache Weise dadurch erzeugt werden, dass die UV Strahlungsquelle 29 eine Strahlung mit einer Wellenlänge von 185 nm ausstrahlt. Bei einer UV-Bestrahlung des Reaktionsbereiches mit dieser Wellenlänge, wird aus dem im Wasser gelösten Sauerstoff, der beispielsweise über die Belüftungsvorrichtung 23 eingetragen wird, Ozon gebildet. Dabei hat es sich als besonders vorteilhaft erwiesen, nur einen Ozongehalt von kleiner 5 mg/Liter, bevorzugt kleiner 2 mg/Liter und in besonders vorteilhafter Ausführung kleiner 0,5 mg/Liter zu erreichen. Es war überraschend zu beobachten, dass selbst mit einer solchen geringen Ozon-Konzentration sich noch hervorragende Reinigungsergebnisse erzielen ließen.

Die einzusetzende Lampenleistung bei der Vorrichtung bzw. dem erfindungsgemäßen Verfahren beträgt bei Durchsatzreaktoren zwischen 0,1 W - 200 W UV-C Leistung (optical power) pro 50 l/min, in bevorzugter Ausführung zwischen 0,5 W - 100 W UV-C Leistung (optical power) pro 50 l/min und in besonders vorteilhafter Ausgestaltung zwischen 10 W bis 80 W UV-C Leistung (optical power) pro 50 l/min. bei anderen Durchsatzleistungen sind die Lampenleistungen entsprechend angepasst. Bei Durchlaufreaktoren beträgt die Kontaktzeit/Behandlungszeit des zu behandelnden Abwasserstroms mit den Lampen zwischen 0,5 Sekunden und 10 Stunden, in bevorzugter Ausführung zwischen 5 Sekunden und 5 Stunden, in besonders vorteilhafter Ausgestaltung zwischen 1 min und 1 Stunde. Die einzusetzende Lampenleistung bei der Vorrichtung bzw. dem erfindungsgemäßen Verfahren beträgt bei Batch-Reaktoren zwischen 0,1 W und 200 W UV-C Leistung (optical power) pro 100 l zu behandelnder Wassermenge, in bevorzugter Ausführung zwischen 0,5 W und 50 W UV-C Leistung (optical power) pro 100 I zu behandelnder Wassermenge, in besonders bevorzugter Ausführung zwischen 1 W und 15 W UV-C Leistung (optical power) pro 100 l zu behandelnder Wassermenge.

Bei Batch Reaktoren beträgt die Kontaktzeit/Behandlungszeit des zu behandelnden Abwasserstroms mit den Lampen zwischen 1 Minute und 2 Tagen, in bevorzugter Ausführung zwischen 10 Minuten und 12 Stunden, in besonders vorteilhafter Ausgestaltung zwischen 30 min und 6 Stunden.

In einer bevorzugten Verfahrensausgestaltung wird die zu dosierende Flüssigkeit - der Oxidator - aus dem Behälter 18 in mehreren einzelnen Dosierschritten, zeitlich versetzt, zugegeben. Die Menge der einzelnen Dosierungen sowie die Pausenzeiten zwischen den einzelnen Dosierungen kann an der Steuerung eingestellt werden. Die Pausenzeiten liegen typischerweise zwischen 1 Sekunde und 1 Stunde, bevorzugt zwischen 10 Sekunden und 5 Minuten pro Dosiervorgang.

In gleicher Weise ist es vorteilhaft, die Dosierung vorzunehmen, während über die Belüftungsvorrichtung und die aus dem Luftauslass 23 austretenden Luftblasen eine Vermischung der zu dosierenden Flüssigkeit mit dem zu behandelnden Wasser in der Behandlungsstufe 22 stattfindet.

Die Konzentrationen der eingesetzten Wasserstoffperoxid Lösung liegen zwischen 0,5 % und 100 %, vorzugsweise zwischen 1 % und 50 %, in besonders vorteilhafter Weise zwischen 10 % und 40 %. Die Dosiermenge von Wasserstoffperoxid liegt zwischen 0,1 ml und 10 l pro 100 l zu behandelnder Menge an Wasser, vorzugsweise 0,5 ml und 100 ml pro 100 l zu behandelnder Menge an Wasser, in besonders vorteilhafter Anwendung 1 ml bis 15 ml pro 100 l zu behandelnder Menge an Wasser. Die vorstehenden Dosiermengen beziehen sich auf den Einsatz von einer WasserstoffperoxidLösung mit 35 % Anteil Wasserstoffperoxid. Bei Verwendung einer Wasserstoffperoxid Lösung mit einem abweichenden Anteil an Wasserstoffperoxid sind die Mengen entsprechend umzurechnen.

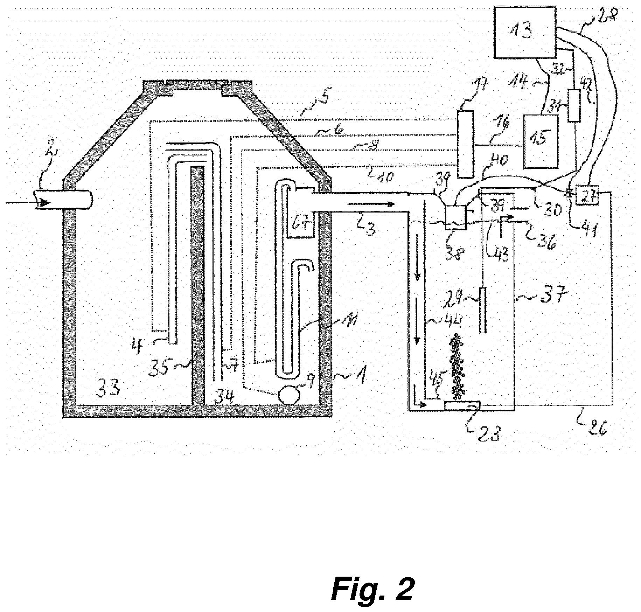

In Figur 2 wird eine weitere beispielhafte Anwendung der Vorrichtung sowie des erfindungsgemäßen Verfahrens dargestellt. Gezeigt ist in dieser Figur zunächst dieselbe Abwasserbehandlungsanlage 1, die bereits in der Figur 1 beschrieben ist. Gleiche Teile sind darin mit denselben Bezugszeichen gekennzeichnet ebenso wie zu der Vorrichtung zum Abbau von persistenten organischen Verunreinigungen der Figur 1. Bei der in Figur 2 gezeigten Ausgestaltung der Reinigungsvorrichtung fließt nach der biologischen Reinigung das gereinigte Abwasser über die Ablaufleitung 3 in den im Folgenden ebenfalls als Behandlungsstufe 37 angesprochenen Reaktionsbehälter. In der Behandlungsstufe 37 befindet sich eine Belüftungsvorrichtung mit einem Luftauslass 23. Weiterhin verfügt diese Behandlungsstufe 37 über einen Ablauf 36. In Abbildung 2 wurde die Größe der Behandlungsstufe 37 so groß dargestellt, dass sie die Behandlung im Chargenverfahren bzw. Zyklusverfahren durchgeführt werden kann. Das bedeutet, dass zum Beispiel bei SBR Anlagen das aus der Ablaufleitung 3 abfließende biologisch gereinigte Abwasser komplett in die Behandlungsstufe 37 fließen kann und dort dann entsprechend gereinigt bzw. behandelt werden kann. Die Größe der Behandlungsstufe 37 kann dabei auch so gewählt werden, dass das Volumen von mehr als einem Zyklus, also mindestens zwei Zyklen aus der vorgeschalteten SBR Anlage aufgenommen werden und dann in einem Zyklus komplett gereinigt werden kann, um beispielsweise Energie für den Eintrag von Luft über den Luftauslass 23 bzw. dem Kompressor 27 einsparen zu können. Wenn beispielsweise bei einer Anlage für vier Einwohner und einem täglichen Abwasseranfall von 150 l pro Einwohner und Tag das Nutzvolumen der Behandlungsstufe 37 mindestens 600 l beträgt, kann das Abwasser zum Beispiel aus vier Zyklen aus der vorgeschalteten SBR Stufe (wenn ein Zyklus in einer beispielhaften Betrachtung 6 Stunden dauert) in der Behandlungsstufe 37 behandelt und dann in einem einzigen Reinigungszyklus gereinigt werden.

Wenn die vorgeschalteten Kleinkläranlagen beispielsweise eine Festbettanlage oder Wirbelbettanlage ist, kann das aus diesen Anlagen abfließende Abwasser sowohl in einem Durchlaufverfahren als auch im Zyklus oder Chargenverfahren in der Behandlungsstufe 37 behandelt werden. Auch hierbei kann die Behandlungsstufe 37 so ausgelegt sein, dass sie zum Beispiel aus solchen Anlagen das Wasser auch über mehrere Stunden aufnehmen, sammeln und dann in einem Reinigungsschritt bzw. einem Reinigungszyklus gereinigt wird.

In der Behandlungsstufe 37 befindet sich weiterhin eine UV-Strahlungsquelle 29, die mit einer elektrischen Leitung 30 mit einem Vorschaltgerät 31 verbunden ist. Das Vorschaltgerät 31 ist wiederum über eine Steuerleitung 32 mit der Steuerung 13 verbunden.

In Figur 2 ist die Oxidatorenzufuhr mit ihrem Vorratsbehälter 38 für die zu dosierende Flüssigkeit in die Behandlungsstufe 37 integriert. Der Behälter 38 kann dabei fest an der Behandlungsstufe 37 verschraubt oder mit Seilen oder Ketten 39 an der Behandlungsstufe 37 befestigt sein. Der Behälter 38 ist für die pneumatische Dosierung mit einer Druckluftleitung 40 mit einem Kompressor 27 verbunden. Da der Kompressor 27 auch die Belüftungsvorrichtung mit dem Luftauslass 23 über die Druckluftleitung 26 mit Druckluft versorgt, ist es erforderlich, dass die Druckluftleitung 40 ein Magnetventil oder ein mit einem Schrittmotor versehenes Ventil oder ein sonstiges Regelorgan 41 versehen ist. Dieses Regelorgan 41 ist mit einer Steuerleitung 42 mit der Steuerung 13 verbunden. Wenn der Kompressor 27 über die Steuerleitung 28 eingeschaltet wird und das Regelorgan 41 geschlossen ist, strömt die Druckluft über die Leitung 26 zu dem Luftauslass 23. Wenn das Regelorgan 41 geöffnet ist, strömt die Luft über die Druckluftleitung 40 zu dem Lager- und Dosierbehälter 38 und löst die pneumatische Dosierung aus. Da der Gegendruck des Luftauslasses 23 durch den Wasserspiegel 43 über dem Luftauslass größer ist als der Druck, den die Druckluft in der Dosiervorrichtung in dem Lager- und Dosierbehälter 38 zu überwinden hat, strömt die Druckluft bei geöffnetem Regelventil 41 in den Vorratsbehälter 38. Sofern durch die Dichte der zu dosierenden Flüssigkeit oder einen hohen Füllstand in dem Behälter 38 der Gegendruck beim Dosiervorgang sehr hoch ist, kann auch in die Leitung 26 ein Regelorgan eingebaut werden. Wenn beispielsweise ein Magnetventil oder ein über ein Schrittmotor gesteuertes Ventil oder durch ein sonstiges Regelorgan in der Leitung 26 eingebaut und geschlossen ist, ist bei geöffnetem Regelorgan 41 beim Betrieb der Komponente zur Erzeugung von Druckluft 27 sichergestellt, dass die Druckluft über die Leitung 40 den Dosiervorgang in dem Behälter 38 auslöst. Die Funktion einer pneumatischen Dosiervorrichtung ist beispielsweise in der deutschen Patentanmeldung DE 10 2005 014 301 A1 beschrieben sowie in der deutschen Patentanmeldung DE 103 44 313 A1, sodass durch diese explizite Bezugnahme auf diese Dokumente bezüglich der pneumatischen Dosierung auf deren Inhalt verwiesen wird.

Es können auch mehrere Vorratsbehälter 38 eingesetzt werden, um beispielsweise verschiedene Stoffe in den gleichen oder unterschiedlichen Mengen und zu gleichen oder unterschiedlichen Zeiten in die Behandlungsstufe 37 zu dosieren.

Das aus der Kleinkläranlage 1 über den Ablauf 3 der Behandlungsstufe 37 abfließende Abwasser wird über eine von dem übrigen Inhalt der Behandlungsstufe 37 abgetrennte Leitvorrichtung 44 in den unteren Bereich der Behandlungsstufe 37 geleitet. Bei einer solchen Leitvorrichtung kann es sich um eine innere Behälterwand, ein Rohr oder dergleichen handeln. Das zugeführte, biologisch gereinigte Abwasser, jedoch noch nach zu reinigende Wasser gelangt im unteren Bereich 45 in die Behandlungsstufe. Auf diese Weise kann in einer beispielhaften Ausgestaltung durch Verdrängung des über die Leitvorrichtung 44 im unteren Bereich 45 der Behandlungsstufe 37 einströmende (nur) biologisch gereinigte Abwasser das im oberen Bereich befindliche, bereits auch von biologisch nicht abbaubaren Stoffen befreite/gereinigte Abwasser über den Ablauf 36 die Behandlungsstufe 37 verlassen.

In einer Weiterbildung ist in der Behandlungsstufe 37 eine Tauchpumpe angeordnet, um nach der Entkeimung und Reinigung des Wassers von biologisch nicht abbaubaren Stoffen gereinigtes Abwasser aus der Behandlungsstufe 37 heraus zu fördern. In gleicher Weise kann auch ein Druckluftheber (auch als Mammutpumpe bezeichnet) das von biologisch nicht abbaubaren Stoffen gereinigte und entkeimte Abwasser aus der Behandlungsstufe 37 heraus fördern, bevor wieder neues, zu reinigendes Abwasser aus der vorgeschalteten Kleinkläranlagen 1 in die Behandlungsstufe 37 fließt.

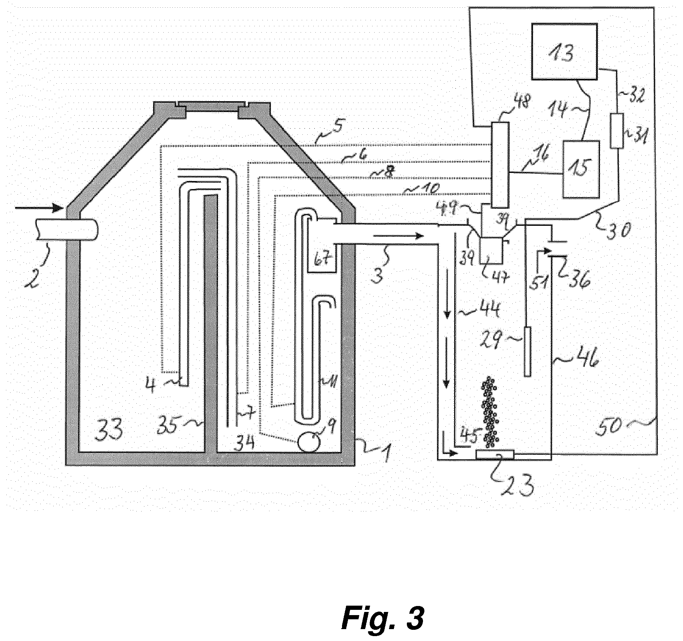

In Figur 3 ist eine weitere beispielhafte Anwendung der Vorrichtung dargestellt. In Figur 3 ist dieselbe Abwasserbehandlungsanlage 1 dargestellt, wie auch in den vorstehenden Figuren.

Nach der biologischen Reinigung fließt das gereinigte Abwasser über die Ablaufleitung 3 in den im Folgenden ebenfalls als Behandlungsstufe 46 angesprochenen Reaktionsbehälter. In der Behandlungsstufe 46 befindet sich wiederum ein Luftauslass 23. Weiterhin verfügt die Behandlungsstufe 22 über einen Ablauf 36. Bezüglich der Auslegung der Größe der Behandlungsstufe 37 gilt für die in Figur 3 gezeigte Vorrichtung zum Abbau von persistenten organischen Verunreinigungen dasselbe, wie zu der diesbezüglichen Auslegung der zu Figur 2 beschriebenen Vorrichtung. Gleiches gilt für die in der Behandlungsstufe 46 befindliche UV-Strahlungsquelle 29. Bei der in Figur 3 gezeigten Vorrichtung zum Abbau von persistenten organischen Verunreinigungen/Mikroschadstoffen als Nachreinigung des aus dem Ablauf 3 der Kleinkläranlage 1 geförderten Wassers ist die Oxidatorzufuhr, umfassend einen Vorratsbehälter 47 und eine Dosierung in die Behandlungsstufe 46 integriert. Der Behälter 47 kann dabei fest an der Behandlungsstufe 46 verschraubt sein oder mit Seilen oder Ketten 39 an der Behandlungsstufe 46 befestigt sein. Der Lager- und Dosierbehälter 47 ist für die pneumatische Dosierung mit einer Druckluftleitung 49 mit der Vorrichtung zur Verteilung von Druckluft 48 verbunden. Somit wird für die pneumatische Dosierung kein zusätzlicher Kompressor benötigt, da bei dieser Ausgestaltung der für den Betrieb der kleinen Kläranlage/kleinen Kläranlage notwendige Kompressor 15 genutzt wird. Die Druckluft gelangt von dem Kompressor 15 über die Vorrichtung 48 zur Verteilung von Druckluft und die Leitung 49 zu dem Vorratsbehälter 47. Die Druckluft wird von der Vorrichtung 48 zur Verteilung von Druckluft mittels eines durch ein Magnetventil oder Schrittmotor gesteuerten Ventils durch Öffnen über die Leitung 49 zum Behälter 47 weitergeleitet. Das Ansteuern des Regelventils an der Vorrichtung 48 zur Verteilung von Druckluft erfolgt durch die Steuerung 13. Dabei kann die Druckluft aus der Vorrichtung 48 entnommen werden, während der Verdichter 15 bereits läuft, um eine andere Funktion in der Kleinkläranlage 1 auszuüben. In diesem Fall muss die Steuerung 13 nur das Regelventil an der Vorrichtung 48 zur Verteilung von Druckluft öffnen, damit die Druckluft in die Druckleitung 49 strömen kann. Sofern ein Dosiervorgang zu einem Zeitpunkt stattfindet, beispielsweise in der Absetzphase bei einer SBR Kläranlage, in dem der Verdichter 15 nicht läuft, kann die Steuerung 13 den Verdichter 15 für den Dosiervorgang einschalten, sodass die Luft über die Vorrichtung 48 zur Verteilung von Druckluft mit einem entsprechend geöffneten Regelventil über die Leitung 49 in den Vorratsbehälter 47 gelangt und dort den Dosiervorgang vollzieht.

In der Darstellung der Figur 3 wird der Luftauslass 23 der Belüftungsvorrichtung über die Druckluftleitung 50 mit Druckluft versorgt. Die Druckluftleitung 50 ist an der Vorrichtung zur Verteilung von Druckluft 48 angeschlossen. Dabei kann die Druckluft aus der Vorrichtung zur Verteilung von Druckluft 48 entnommen werden, während der Verdichter 15 bereits läuft, um eine andere Funktion in der Kleinkläranlage 1 auszuüben. In diesem Fall muss durch die Steuerung 13 nur das Regelventil an der Vorrichtung zur Verteilung von Druckluft 48 geöffnet werden, damit die Druckluft in die Druckleitung 50 zu der Belüftungsvorrichtung 23 strömen kann. Sofern die Belüftungsvorrichtung 23 eine Belüftung zu einem Zeitpunkt durchführen soll, beispielsweise in der Absetzphase bei einer SBR Kläranlage, in dem der Verdichter 15 nicht läuft, kann die Steuerung 13 den Verdichter 15 für den Belüftungsvorgang einschalten, sodass die Luft über die Vorrichtung zur Verteilung von Druckluft 48 mit einem entsprechend geöffneten Regelventil über die Leitung 50 zu der Belüftungsvorrichtung 23 gelangt und dort den Belüftungsvorgang vollzieht.

Auch bei der Vorrichtung der Figur 3 erfolgt der Zulauf über eine Leitvorrichtung 44. Hierzu gelten dieselben Ausführungen wie zu dem Ausführungsbeispiel der Figur 2. Gleiches gilt für den Einsatz einer Tauchpumpe oder eines Drucklufthebers zum Abziehen von gereinigtem Wasser, wenn dieses nicht durch Überlauf aus der Behandlungsstufe 46 fließt.

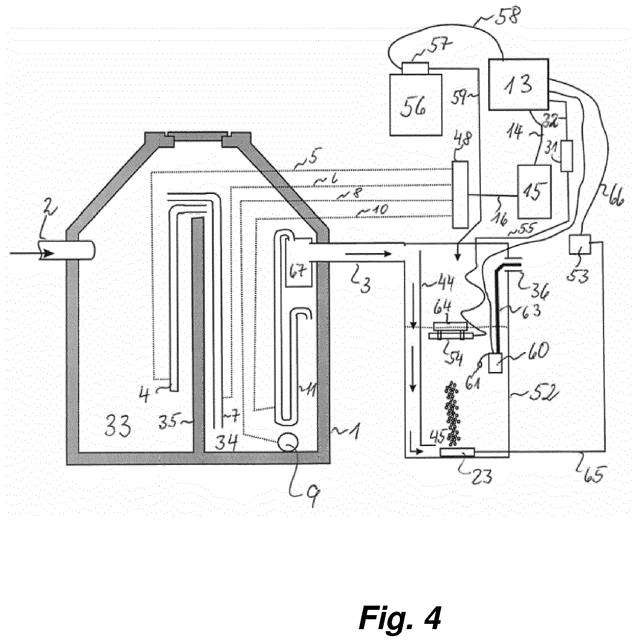

In Figur 4 wird eine weitere beispielhafte Anwendung der Vorrichtung dargestellt. In Figur 4 ist dieselbe Abwasserbehandlungsanlage 1 dargestellt, wie auch in den vorstehenden Figuren.

Nach der biologischen Reinigung fließt das gereinigte Abwasser über die Ablaufleitung 3 in den im Folgenden als Behandlungsstufe 52 angesprochenen Reaktionsbehälter. In der Behandlungsstufe 52 befindet sich wiederum ein Luftauslass 23.Weiterhin verfügt die Behandlungsstufe 52 über einen Ablauf 36. Bezüglich der Auslegung der Größe der Behandlungsstufe 37 gilt für die in Figur 4 gezeigte Vorrichtung zum Abbau von persistenten organischen Verunreinigungen dasselbe, wie zu der Auslegung der zu Figur 2 beschriebenen Vorrichtung. Gleiches gilt für die in der Behandlungsstufe 52 befindliche UV-Strahlungsquelle 29.

Bei der in Figur 4 gezeigten Vorrichtung zum Abbau von persistenten organischen Verunreinigungen als Nachreinigung des aus dem Ablauf 3 der Kleinkläranlage 1 geförderten Wassers kann die Oxidatorzufuhr, umfassend einen Vorratsbehälter 56 und eine Dosierung, außerhalb der Behandlungsstufe 52, etwa in einem Schacht, einem Schaltschrank, einem Kellerraum, einer Garage oder einem sonstigen Gehäuse untergebracht sein. Der Behälter 56 ist für die Dosierung mit einer Dosierpumpe 57 ausgerüstet und über eine Steuerleitung 58 mit der Steuerung 13 verbunden. Es können elektrisch angetriebene oder pneumatisch oder hydraulisch oder magnetisch angetriebene Dosierpumpen 57 verwendet werden. Die Dosierpumpe 57 saugt die zu dosierende Flüssigkeit aus dem Behälter 56 an und fördert die zu dosierende Flüssigkeit über die Dosierleitung 59 in die Behandlungsstufe 52. Es können auch mehrere Behälter 56 mit entsprechenden Dosierpumpen 57 eingesetzt werden, um beispielsweise verschiedene Stoffe in den gleichen oder unterschiedlichen Mengen und zu gleichen oder unterschiedlichen Zeiten in die Behandlungsstufe 52 zu dosieren.

Das aus der Kleinkläranlage 1 über den Ablauf 3 der Behandlungsstufe 52 abfließende Abwasser wird über eine Leitvorrichtung 44 in den unteren Bereich der Behandlungsstufe 52 in dieser beispielhaften Ausführung geleitet. Das zugeführte, biologisch gereinigte Abwasser gelangt im unteren Bereich 45 in die Behandlungsstufe. Das aus der Kleinkläranlagen oder kleinen Kläranlage 1 über den Ablauf 3 der Behandlungsstufe 52 zu fließende Wasser kann aber auch ohne eine Leitvorrichtung 44 zugeführt werden, so dass das biologisch gereinigte Abwasser einfach von oben frei in die Behandlungsstufe 52 zuläuft.

In der dargestellten Ausgestaltung ist in der Behandlungsstufe 52 eine Tauchpumpe 60 mit Schwimmer 61 befestigt. Mit dieser Tauchpumpe 60 wird das in der Behandlungsstufe 52 behandelte Abwasser nach der Behandlung über die Leitung 63 in den Ablauf der Behandlungsstufe 36 gefördert. In gleicher Weise kann auch ein Druckluftheber (auch als Mammutpumpe bezeichnet) das von biologisch nicht abbaubaren Stoffen gereinigte und entkeimte Abwasser aus der Behandlungsstufe 52 heraus fördern, bevor wieder neues, nur biologisch gereinigtes Abwasser aus der vorgeschalteten Kleinkläranlagen oder kleinen Kläranlage 1 in die Behandlungsstufe 52 fließt.

In Figur 4 ist zudem die UV Strahlungsquelle 54 in einer schwimmenden Ausführung dargestellt. Dazu ist die UV Strahlungsquelle 54 mit einem Schwimmkörper 64 ausgerüstet, der die UV Strahlungsquelle 54 immer in einem getauchten Zustand hält. Da durch den Einsatz einer Tauchpumpe bzw. Fördererpumpe 60 der Wasserspiegel je nach zu behandelnde Abwassermenge schwankt und die UV Strahlungsquelle 54 immer getaucht sein sollte, damit die Wärme abgeführt werden kann und die Strahlung in vollem Umfang der zu behandelnden Flüssigkeit in der Behandlungsstufe 52 genutzt werden kann, ist diese Ausführung mit einem Schwimmkörper 64 sinnvoll. Die UV Strahlungsquelle 54 ist somit unabhängig vom Wasserstand in der Behandlungsstufe 52 stets getaucht. Das bedeutet, dass die UV Strahlungsquelle 54 nicht überhitzen kann. Zudem ist sichergestellt, dass immer die volle Strahlungsleistung der UV Strahlungsquelle 54 auch in der zu behandelnden Flüssigkeit der Behandlungsstufe 52 genutzt werden kann. Die UV Strahlungsquelle 54 ist über eine Steuerleitung 55 mit dem Vorschaltgerät 31 verbunden. Durch die schwimmende Ausführung der UV Strahlungsquelle 54 ist die Steuerleitung 55 so gestaltet, dass sich diese der veränderten Höhenlage der UV Strahlungsquelle 54 anpasst. Dies kann beispielsweise durch ein Spiralkabel hergestellt werden oder durch ein einfach entsprechend langes Kabel sichergestellt werden. Das Vorschaltgerät 31 ist wiederum über eine Steuerleitung 32 mit der Steuerung 13 verbunden. Die Steuerung 13 schaltet während des Reinigungsprozesses der Behandlungsstufe 52 die UV Strahlungsquelle 54 entsprechend ein. Für die notwendige Vermischung sowie den gewünschten Sauerstoffeintrag wird die Belüftungsvorrichtung 23 über die Druckluftleitung 65 von dem Verdichter 53 mit Druckluft versorgt. Der Verdichter 53 ist über die Steuerleitung 66 mit der Steuerung 13 verbunden und wird von dieser ein bzw. ausgeschaltet.

Durch entsprechende Erfassung der zu behandelnden Abwassermenge in der Kleinkläranlage 1 oder in der jeweiligen Behandlungsstufe 22, 37, 46, 52 kann die Steuerung 13 sowohl die Anzahl der Dosierimpulse in der Dosiervorrichtung 18, 19, 38, 47, 56, 57, die Dauer und Häufigkeit der Durchmischung über aus dem Luftauslass 23 austretenden Luftblasen und oder die Einschaltdauer der UV Strahlungsquelle 29, 61 selbstständig ermitteln. Dies kann beispielsweise einfach über eine Staudruckmessung, über das Einperlverfahren, ein hydrostatischer Druckaufnehmer, einen Drucksensor, einen Schwimmer, einer Stabsonden oder einer sonstigen Vorrichtung zur Erfassung von Höhen, Abwassermengen bzw. Durchflussmengen geschehen.

In einer bevorzugten Ausgestaltung können in der Behandlungsstufe 22, 37, 46, 52 auch mehrere Dosiervorrichtungen eingebaut bzw. angebracht werden, um beispielsweise verschiedene Flüssigkeiten dosieren zu können.

In einer weiteren Ausgestaltung kann auch die Dosierung der zu dosierenden Flüssigkeit bereits in der Abwasserbehandlungsanlage 1 erfolgen, beispielsweise durch Zugabe der zu dosierenden Flüssigkeit in die Vorrichtung zum Fördern des biologisch gereinigten Wassers 11 oder in die Probenentnahmevorrichtung 67 oder in die Ablaufleitung 3. In einer bevorzugten Ausgestaltung kann dann optional die Durchmischung beispielsweise in einem nachgeordneten Schacht oder in der Behandlungsstufe 22, 37, 46, 52 mit einem Rührwerk, einer Belüftungsvorrichtung oder einer Pumpe erfolgen. In gleicher Weise können dann noch zusätzliche Komponenten wie UV-Strahlungsquellen zur Aktivierung von OH-Radikalen, UV-Strahlungsquellen zur Entkeimung sowie mit photokatalytisch beschichtete Komponenten in der nachgeschalteten Behandlungsstufe 22, 37, 46, 52 oder einer sonstigen raumbildenden Einheit durchgeführt werden.

In der Behandlungsstufe 22,37,46,52 kann zudem eine Förderleistung (Pumpe oder Mammutpumpe/Druckluftheber) vorgesehen werden, um partikulären Stoffe, die sich in der Behandlungsstufe 22, 37, 46, 52 absetzen/ansammeln, zurück in die Kleinkläranlagen 1 zu fördern. Wenn aus der der Behandlungsstufe 22, 37, 46, 52 vorgeschalteten Kleinkläranlagen 1 der Behandlungsstufe 22, 37, 46, 52 Wasser bzw. Abwasser zugeführt wird und dieses Wasser bzw. Abwasser partikulären Stoffe enthält, kann dies über eine entsprechend längere Betriebsdauer zu einer Ansammlung von partikulären Stoffen in der Behandlungsstufe 22, 37, 46, 52 führen. Insofern ist es wichtig, dass hier die Möglichkeit der Rückführung der partikulären, abgesetzten Stoffe besteht. In einer vorteilhaften Ausgestaltung erfolgt eine Zirkulation, auch als Rezirkulation bezeichnet, mit einem Teilstrom zwischen 0 % und 100 % des Inhaltes der Behandlungsstufe 22, 37, 46, 52 zurück in die Kleinkläranlage oder kleine Kläranlage 1. Durch die Rezirkulation ist auch eine weitere Verbesserung der Reinigungsleistung in der Kombination Kleinkläranlage und der - das von dieser abgezogene Klarwasser - nachreinigenden Vorrichtung mit ihrer Behandlungsstufe 22, 37, 46, 52 zu erwarten, da in der Kleinkläranlage zurückgeführte Stoffe biologisch abgebaut werden können, die vorher nicht abbaubar waren. Durch die Behandlung des ursprünglich abgezogenen Klarwassers und dessen Reinigung sind die zuvor biologisch nicht abbaubaren Stoffe in biologisch abbaubare Stoffe aufgespalten bzw. chemisch verändert worden sind.

Die Steuerung des Behandlungsprozesses in der Behandlungsstufe 22, 37, 46, 52 kann durch Trübungsmessungen, SAK Messungen, sonstige optischen Messungen, Onlinemessgeräte für TOC, CSB und andere chemische Parameter unterstützt werden. Wird zum Beispiel ein Trübungssensor eingesetzt und der Trübungssensor erkennt, dass das der Behandlungsstufe 22, 37, 46, 52 zufließende Wasser einen hohen Trübungswert aufweist, kann beispielsweise die Menge an Wasserstoffperoxid erhöht werden und/oder die Belüftungszeit und/oder die Einschaltdauer der UV Strahlungsquelle erhöht werden.

In einer ebenfalls bevorzugten Ausgestaltung können als UV-Strahlungsquelle Xe-Excimer-Strahler eingesetzt werden, die Licht besonders niedriger Wellenlänge <190 nm, bevorzugt 172 nm, erzeugen und ausstrahlen. In gleicher Weise können in einer bevorzugten Ausführung auch LEDs als UV-Strahlungsquelle zur Entkeimung und/oder zur Bildung von OH-Radikalen und/oder zur Bildung von Ozon und/oder zur Anregung photokatalytisch aktiver Substanzen, die auf entsprechenden Trägermaterialien oder Oberflächen der Behandlungsstufen aufgebracht sind, genutzt werden. Natürlich kann die Vorrichtung und das erfindungsgemäße Verfahren neben Abwasserbehandlungsanlagen auch in Wasserbehandlungsanlagen und sonstigen Anlagen zur Behandlung von Flüssigkeiten genutzt werden, bei denen Flüssigkeiten zu dosiert werden sollen und/oder eine weitergehende Behandlung erforderlich ist und/oder eine Reduktion von Stoffen durch Abbau und/oder Fällung erreicht werden sollen. Natürlich kann der Behälter, der die zu dosierende Flüssigkeit enthält, auch mit einer Füllstandsanzeige und/oder Füllstandsüberwachung, die in bevorzugter Ausführung mit einer Steuerung in Verbindung steht, ausgestattet sein. In weiteren Ausführungen kann der Behälter zur Bevorratung der zu dosierenden Flüssigkeit mit einer Öffnung zum einfachen Nachfüllen der zu dosierenden Flüssigkeit ausgestattet sein. In einer weiteren vorzugsweisen Ausgestaltung kann an die Leitung, die der Dosiervorrichtung Druckluft zuführt, beispielsweise über ein T-Stück ein Teil der Druckluft auf den Boden des Behälters geführt werden, indem die zu dosierende Flüssigkeit bevorratet ist, um während des Dosiervorganges die zu dosierende Flüssigkeit aufzuwirbeln/zu vermischen/zu homogenisieren, um Ablagerungen und Entmischungen entgegenzuwirken. In einer bevorzugten Anwendung kann die Vorrichtung bzw. das erfindungsgemäße Verfahren alleine oder in Kombination mit anderen Verfahren auch zur Vorbehandlung von Flüssigkeiten vor Einleiten in den kommunalen Kanal oder zur Behandlung von Flüssigkeiten vor Einleitung in ein Gewässer oder das Grundwasser genutzt werden.

## Patentansprüche

1. Verfahren zum Abbau von persistenten organischen Verunreinigungen aus biologisch gereinigtem Abwasser oder aus Grau- oder Niederschlagwasser, **dadurch gekennzeichnet, dass** das zu reinigende Wasser in einen Reaktionsbehälter eingebracht wird, dass das in dem Reaktionsbehälter, dessen Höhe größer als sein Durchmesser ist, befindliche zu reinigende Wasser einer Luftblasenbehandlung ausgesetzt wird, indem Druckluft einem bezüglich der statischen Aufstiegsbewegung der Luftblasen unterhalb eines in dem Reaktionsbehälter vorhandenen Reaktionsbereiches angeordneten Luftauslass zugeführt wird und die ausperlenden Luftblasen durch den oberhalb des Luftauslasses befindlichen Reaktionsbereich infolge ihrer Aufstiegskraft zum Bewirken einer intensiven Durchmischung sowie einer Sauerstoffanreicherung hindurchtreten, dass in den Reaktionsbereich des Reaktionsbehälters wenigstens ein Oxidator eingebracht wird und der Reaktionsbereich einer UV-Bestrahlung von einer langgestreckte UV-Strahlungsquelle, deren Längserstreckung parallel zur Aufstiegsbewegungsbahn der aus dem Luftauslass austretenden Luftblasen ist, mit einer ersten Wellenlänge, bei der aus dem in dem Wasser gelösten Sauerstoff und/oder in dem in den Luftblasen enthaltenen Sauerstoff Ozon gebildet wird, und mit einer zweiten Wellenlänge bestrahlt wird, bei der aus dem wenigstens einen Oxidator Hydroxyl-Radikale gebildet werden, wobei der Wasserdurchsatz durch den Reaktionsbehälter zuflussgesteuert wird.

2. Verfahren nach Anspruch 1, **dadurch gekennzeichnet, dass** als Oxidator Wasserstoffperoxid in das in dem Reaktionsbehälter befindliche oder darin einfließende Wasser zudosiert wird.

3. Verfahren nach Anspruch 1 oder 2, **dadurch gekennzeichnet, dass** in das in den Reaktionsbehälter einfließende oder in dem darin befindlichen Wasser eine den Verunreinigungsgrad des Wassers wiederspiegelnde Messgröße erfasst wird und dass das Reinigungsverfahren in Abhängigkeit von dem hierdurch festgestellten Verunreinigungsgrad das Reinigungsverfahren bezüglich
- der Menge des zu dosierenden Oxidators,
- und/oder der Menge der über den Luftauslass in den Reaktionsbehälter eingebrachten Luftmenge pro Zeiteinheit
- und/oder seiner Dauer beeinflusst wird.

## Claims

1. Method for the degradation of persistent organic impurities from biologically purified waste water or from grey water or precipitation water, **characterised in that** the water which is to be purified is introduced into a reaction vessel, that the water to be purified in the reaction vessel, the height of which is greater than the diameter, is subjected to a treatment with air bubbles, **in that** compressed air is delivered to an air outlet arranged beneath a reaction region provided in the reaction vessel in relation to the static rising movement of the air bubbles, and the emitted air bubbles passing through the reaction region located above the air outlet cause, as a result of their upwards rising force, an intensive intermixing and an oxygen enrichment, **in that** at least one oxidator is introduced into the reaction region of the reaction vessel, and the reaction region is irradiated by UV radiation from a longitudinally-extended UV radiation source, the longitudinal extension of which is parallel to the upwards rising movement path of the air bubbles emerging from the air outlet, with a first wavelength, with which ozone is formed from the oxygen dissolved in the water and/or from the oxygen contained in the air bubbles, and with a second wavelength, with which hydroxyl radicals are formed from the at least one oxidator, wherein the water throughput through the reaction vessel is subject to inflow control.

2. Method according to claim 1, **characterised in that,** as the oxidator, hydrogen peroxide is metered into the water present in the reaction vessel or flowing into it.

3. Method according to claim 1 or 2, **characterised in that** a measured value is detected which reflects the degree of impurity of the water flowing into the reaction vessel or present in it, and that the purification process is influenced, as a dependency of the degree of impurity thereby detected, in respect of:
- the quantity of oxidator to be metered in,
- and/or the quantity of the air amount per time unit introduced via the air outlet into the reaction vessel,
- and/or its duration.

## Revendications

1. Procédé de dégradation de contaminants organiques persistants dans les eaux usées traitées biologiquement ou dans les eaux grises ou eaux de pluie, **caractérisé en ce que** l'eau à traiter est introduite dans une cuve de réaction et **en ce que** l'eau à traiter dans la cuve de réaction, dont la hauteur est supérieure à son diamètre, est exposée à un traitement aux bulles d'air, en acheminant de l'air sous pression dans un diffuseur d'air disposé, par rapport au mouvement statique ascendant des bulles d'air, sous une zone de réaction existante dans la cuve de réaction et en laissant perler les bulles d'air à travers la zone de réaction se trouvant au-dessus du diffuseur d'air, lesquelles entraînent, en raison de leur poussée ascendante, un intense brassage ainsi qu'un enrichissement en oxygène, **en ce qu'**au moins un agent oxydant est introduit dans la zone de réaction de la cuve de réaction et la zone de réaction est exposée à un rayonnement UV provenant d'une source de rayonnement UV s'étendant en longueur, dont l'étendue en longueur est parallèle à la trajectoire ascendante des bulles d'air sortant du diffuseur d'air, avec une première longueur d'onde qui permet la formation d'ozone à partir de l'oxygène dissous dans l'eau et/ou de l'oxygène contenu dans les bulles d'air et avec une seconde longueur d'onde qui permet la formation de radicaux hydroxyles à partir de l'au moins un agent oxydant, le débit entrant d'eau dans la cuve de réaction étant régulé.

2. Procédé selon la revendication 1, **caractérisé en ce que** la dose d'agent oxydant ajoutée à l'eau se trouvant ou s'écoulant dans la cuve de réaction est du peroxyde d'hydrogène.

3. Procédé selon la revendication 1 ou 2, **caractérisé en ce qu'une** grandeur reflétant le degré de contamination de l'eau est mesurée dans l'eau se trouvant ou s'écoulant dans la cuve de réaction et **en ce que** le procédé de nettoyage est piloté en fonction du degré de contamination ainsi constaté en ce qui concerne :
- la quantité de dose d'agent oxydant ajoutée,
- et/ou la quantité d'air ajoutée par unité de temps dans la cuve de réaction par le biais du diffuseur d'air,
- et/ou sa durée.
